# EUROPEAN PATENT APPLICATION

(11) **EP 1 569 409 A2**
(43) Date of publication of application: **31.08.2005**
(21) Application number: 04027903.6
(22) Date of filing: 24.11.2004
(51) Int. Cl.: H04L 29/06, H04L 29/08

(54) **Method for transferring a message file between a client and a server**

(30) Priority: 25.02.2004 KR 2004012785
(71) Applicant: SAMSUNG ELECTRONICS CO., LTD., Gyeonggi-cho (KR)
(72) Inventor: Jung, So-Ra Samsung Electronics Co., Ltd., Suwon-si Gyeonggi-do (KR); Sheen, Hye-Young Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed is a method for transferring a message file from a client to a server over the Internet. When message file transfer is stopped after the client initiates the message file transfer to the server, the client sending a request for information of the transfer-stopped message file to the server. The server provides the transfer-stopped message file information to the client in response to the file information request. The client carrying out an upload resumption function to upload transfer-stopped partial contents of the message file to the server according to the transfer-stopped message file information provided from the server.

## Description

The present invention relates to hypertext transfer protocol (HTTP) technology in an Internet environment, and more particularly to a method for transferring a message file using HTTP.

When a user transfers a message file in an Internet or wireless Internet environments, the message file transfer may fail due to external factors such as network instability or call cutoff. Alternatively, the user may stop the message file transfer before completion.

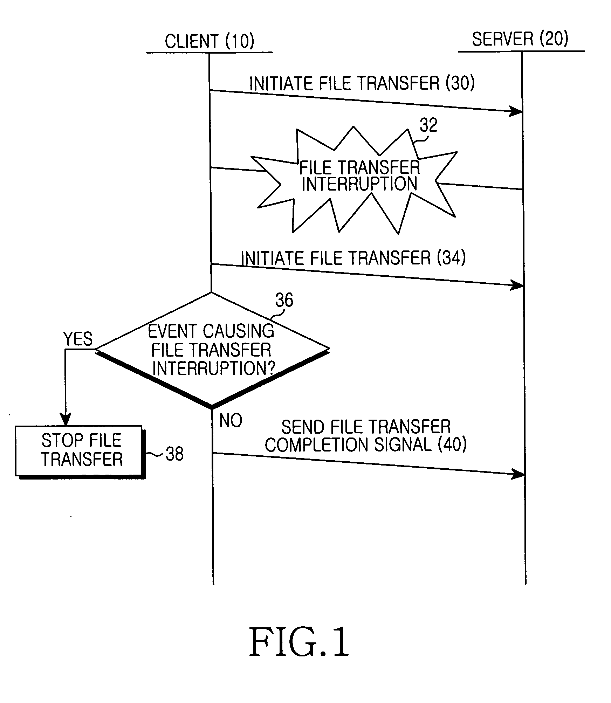

A conventional processing operation using the existing hypertext transfer protocol (HTTP) will be described with reference to FIG. 1. FIG. 1 is a flow chart illustrating the conventional processing operation for transferring a message file using HTTP. Referring to FIG. 1, a client 10 initiates transfer of a message file to a server 20 at step 30. An event causing file transfer interruption occurs before the client 10 completes transfer of the entire message file to the server 20 at step 32. At step 34, the client 10 again transfers the message file when a message file transfer environment becomes stable. At this point, the client 10 transfers the message file from the beginning even though part of the file has been already transferred. At step 36, the client 10 determines, whether an event causing file transfer interruption occurs. If not, the client 10 completes the file transfer and sends a file transfer completion signal to the server 20 at step 40. Otherwise, if an event causing file transfer interruption occurs, the client 10 stops the message file transfer at step 38.

According to the HTTP, there is provided a download resumption function for a message file when the client 10 receives a message file, but there is no defined upload resumption function for a message file when the client 10 transfers a message file. If the message file transfer fails or the user cancels the message file transfer after initiating the message file transfer, the client 10 transfers the message file from the beginning when the message file transfer is resumed.

As described above, because the conventional HTTP technology does not take into account a part of the message file already transferred when the client resumes the message file transfer, the message file is transferred from the beginning. In an algorithm similar to the upload resumption function, the server makes a message file retransfer request and the client retransfers the message file in response to the message file retransfer request.

The conventional message file transfer method described above is inefficient in that a message file transfer time is increased because data already uploaded to the server must be retransferred after file transfer is stopped. When the conventional message file transfer method is used, wireless bandwidth can be wasted and increased wireless Internet fees can be costly to the user, in the wireless Internet environment. Moreover, the above-described conventional method has another problem in that the message file transfer technique based on the message file retransfer request from the server does not take into account the user's status, such when a terminal is incapable of an upload resumption function, e.g. when another function, such as voice communication, is being performed.

Therefore, the present invention has been made in view of the above problems.

It is the object of the present invention to provide a message file transfer method that can resume message file transfer in response to a user's retransfer request rather than a server's retransfer request when the message file transfer fails or is cancelled by the user after the message file transfer is initiated.

This object is solved by the subject matter of the independent claims.

Preferred embodiments are defined in the dependent claims.

Accordingly, the present invention can reduce a waste of bandwidth in a wireless environment and reduce cost, e.g., Internet use fees charged to a user by the Internet service provider.

The present invention supports an efficient upload resumption function in which a user receives information of partial file contents already transferred from a corresponding server and then resumes message file transfer from a transfer-stopped point when the message file transfer fails or is cancelled by the user after the message file transfer is initiated, rather than from the beginning.

In other words, the present invention supports the upload resumption function in which message file transfer is resumed, taking into account user convenience, in a state where a message file transfer environment is better, and in which the resumed message file transfer is carried out from the transfer-stopped point, different from the conventional method in which the user's terminal receives a message file retransfer request from the server and then carries out a message file retransfer operation for the entire message file.

Consequently, the upload resumption function in accordance with the present invention can reduce message file transfer time by carrying out the transfer of partial contents of the message file rather than the retransfer of all messages in the message file, reduce waste of wireless bandwidth in a wireless terminal environment, and reduce the cost of the wireless Internet use assessed to the user.

The above functions and other advantages of the present invention will be more clearly understood from the following detailed description taken in conjunction with the accompanying drawings, in which:
FIG. 1 is a flow chart illustrating a conventional processing operation for transferring a message file via hypertext transfer protocol (HTTP);
FIG. 2 is a block diagram illustrating the configuration of a message file transfer system to which the present invention is applied;
FIG. 3 is a block diagram illustrating the configuration of a client in accordance with one embodiment of the present invention; and
FIG. 4 is a flow chart illustrating control flow between a client and a server at the time of transferring a message file in accordance with one embodiment of the present invention.

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention rather unclear.

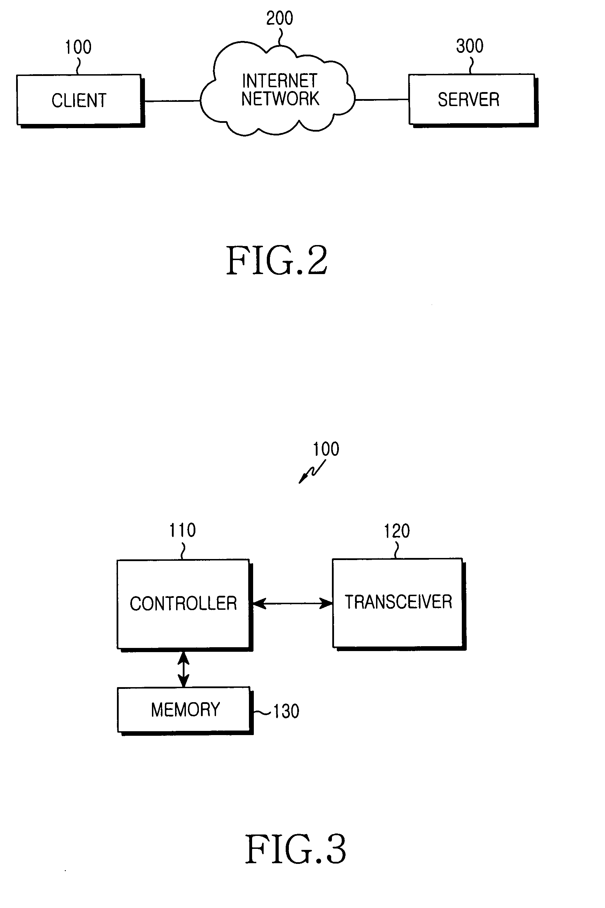

FIG. 2 is a block diagram illustrating the configuration of a message file transfer system to which the present invention is applied. Referring to FIG. 2, the message file transfer system comprises a client 100, an Internet network 200 and a server 300. The client 100 transfers a message file to the server 300 over the Internet network 200. Then, the server 300 receives the message file from the server 300. Before transferring the message file, the client 100 sends a message file to the server 300 to determine whether the server 300 supports an upload resumption function. Then, the client 100 provides an identifier (ID) for identifying the message file. When the predetermined message file has been transferred from the client 100 to the server 300, the server 300 receives and refers to the ID for identifying the message file and determines whether a message file corresponding to the ID is present in the server 300. If a message file corresponding to the received ID is determined to be present, the server 300 deletes the message file stored in the server 300. Moreover, if the server 300 supports the upload resumption function, the server 300 stores information of a message file size at a message file transfer-stopped point and an already transferred message file when the message file transfer is stopped. Upon retransferring the transfer-stopped message file, the client 100 requests that the server 300 check the size of at least one transfer failed message file. Subsequently, upon receiving a request for transfer-stopped file information, the server 300 sends the transfer-stopped file information to the client 100. The client 100 then transfers the remaining partial contents based on information of a partial message file size received from the server 300.

Now, a configuration of the client 100 described above will be described with reference to FIG. 3. FIG. 3 is a block diagram illustrating the configuration of the client 100 in accordance with one embodiment of the present invention. The client 100 comprises a controller 110, a transceiver 120 and a memory 130. When message file transfer to the server 300 is initiated, the controller 110 sends, to the server 300, a message for determining whether the server 300 supports an upload resumption function, before transferring the message file. If the server 300 supports the upload resumption function, the controller 110 transfers the message file to the server 300 via the transceiver 120. The transceiver 120 performs a file transmission and reception operation with the server 300. If an event causing file transfer interruption occurs when the message file is transferred to the server, the controller 110 stops the message file transfer. The event causing file transfer interruption occurs, for example, in the case where the transmission environment of the message file deteriorates or the user stops the message file transfer. When the message file transfer is stopped, the controller 110 stores information of a corresponding message file in the memory 130. The information of the transfer-stopped message file can be the corresponding message file's identifier (ID) and information of a size of transferred partial contents of the message file. When the user makes a message file retransfer request, the controller 110 requests that the server 300 provide information of the transfer-stopped message file. Upon receiving the information from the server 300, the controller 110 refers to the transfer-stopped message file information and determines whether the message file has been changed. In more detail, the controller 110 compares a size of transferred message file contents with a size of message file contents received by the server 300 included in the received transfer-stopped message file information. If the size information units are identical as a result of the comparison, the controller 110 transfers only transfer-stopped partial contents of the message file.

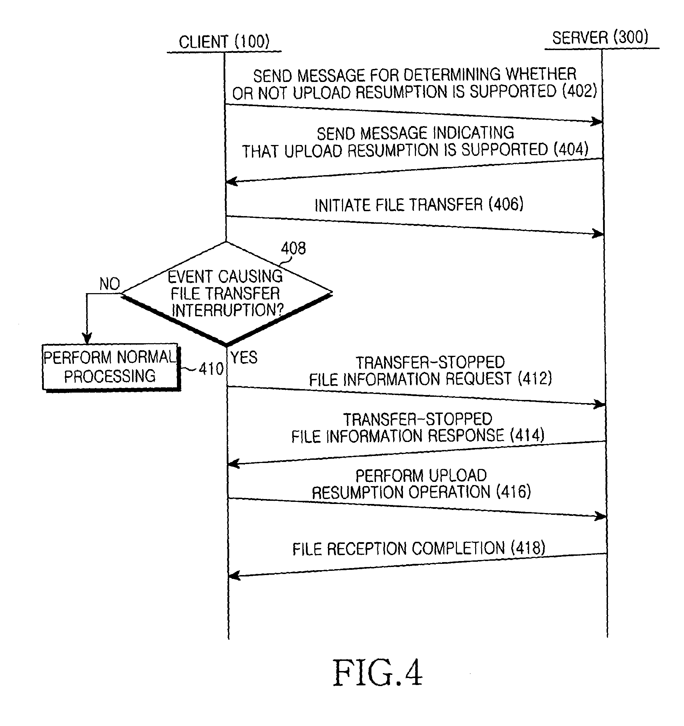

Next, control flow between the client 100 and the server 300 at the time of transferring at least one message file will be described with reference to FIG. 4. Referring to FIG. 4, at step 402 the client 100 sends, to the server 300, a message for determining whether the server 300 supports an upload resumption function before a message file is transferred. The client 100 configures the message for determining whether the server 300 supports the upload resumption function, according to hypertext transfer protocol version 1.1 (HTTP/1.1) OPTIONS Request-Uniform Resource Identifier (URI). The predefined OPTIONS method is used for making a request for information of a server corresponding to a Request-URI. To use the upload resumption function, the client 100 makes an OPTIONS request to determine whether the server 300 supports a partial information (PINFO) method.

The server 300 then transfers a message indicating that the upload resumption function can be supported to the client 100 at step 404. The server 300 includes information of "Allow: GET, HEAD, PUT, PINFO" in a response message according to HTTP/1.1 200 OK. In other words, the server 300 provides supportable information in response to the OPTIONS request from the client 100. When the server supports the upload resumption function, a PINFO method entity must be included in the Allow entity. The PINFO method entity and the Message-ID entity are entities added for the upload resumption function in accordance with the present invention. The OPTIONS and POST methods defined by the existing HTTP are associated with the upload resumption function. For reference, Host and User-Agent fields used for OPTIONS, POST and PINFO associated with the upload resumption function are entities defined by the existing HTTP 1.1. A Range header field is also an entity defined by the existing HTTP 1.1 and used according to an HTTP method specification.

The PINFO is defined so that the client 100 sends a request for size information of the transfer-stopped message to the server 300. The case where the server's response for the PINFO is erroneous means that no message corresponding to the Message-ID requested by the client 100 is present in the server 300 or a value of the Message-ID is invalid. In case of the server's response 200 OK for the PINFO, the size information of a corresponding message must be included. The OPTIONS request from the client 100 is available only in the case where the PINFO is included in the Allow entity.

The client 100 stores a response to the message indicating whether the server 300 supports the upload resumption function. Subsequently, the client 100 initiates message file transfer at step 406. At this point, the transferred message file is configured according to HTTP/1.1 Request-URI, and includes information, e.g., "Host: host name", "User-Agent: User-Agent name", "Message-ID: message identifier" and other information. The message file transfer conforms to the predefined HTTP POST method. In order that the upload resumption function can be supported, the client 100 adds, to the message, the Message-ID entity for identifying the message in addition to the Host and User-Agent entities listed above. When the message file transfer by the client 100 is stopped, the server 300 must preserve an already transferred message file without deleting it.

When the server 300 stores a previous message file identical to a new message file transferred from the client 100, it deletes the previous message file and then stores the new message file. Subsequently, at step 408 the client 100 determines whether an event causing file transfer interruption occurs. That is, the message file transfer may fail due to an external factor or the user can cancel the message file transfer. If an event causing file transfer interruption occurs, the client 100 stops the message file transfer. At this point, where supporting the upload resumption function, the server 300 must preserve information of the currently transferred message file until a message file storing expiration time according to a message file storing time appointed between the client 100 and the server 300 when message file transfer by the client 100 is stopped. When the user does not send a message file retransfer request to the client 100 until the message file storing expiration time, the server 300 can automatically delete a corresponding message file.

For example, when the user makes the message file retransfer request, the client 100 requests that the server 300 provide information of the transfer-stopped message file at step 412. That is, in the case where the client 100 uploads a transfer-stopped message file, the client 100 requests that the server 300 provide information indicating whether the transfer-stopped message file is stored in the server 300 and size information of the transfer-stopped message file before the client 100 uploads the transfer-stopped message file. The request for information of the transfer-stopped message file destined for the server 300 is based on HTTP/1.1 PINFO Request-URI. A PINFO request message includes "Host: client host name", "User-Agent: client User-agent name", "Message-ID: message identifier" and other information. The PINFO method is used when the client 100 requests that the server 300 provide information of the transfer-stopped message file so that the client 100 can perform the upload resumption function. The client 100 must include the Host, User-Agent and Message-ID entities in the PINFO method.

The server 300 receiving the transfer-stopped file information request checks for the information of the currently received message file of the corresponding message file stored at step 414. The currently received message file information includes information indicating a content range of the currently received message file, a size of the entire message file and the existence of a chunk mode. According to a result of the check, the server 300 notifies the client 100 of the transfer-stopped file information. The server's response to the request includes "Message-ID: message identifier" and "Content-Range: bytes" (indicating a size of at least one transfer-stopped message/length of the total message contents) according to HTTP/1.1 200 OK. That is, when locating a message corresponding to the PINFO request from the client 100, the server 300 provides stored message file size information to the client 100. The message file size information is provided using the predefined Content-Range entity.

Meanwhile, when a Message-ID associated with a request from the client 100 is invalid or no message file corresponding to the Message-ID is present in the server 300, the server 300 notifies the client 100 that the message file upload resumption function cannot be performed. The server's error response to the PINFO request conforms to the server's error response format associated with the existing POST or OPTIONS request. At this point, the client 100 must carry out the message file transfer from the beginning using the POST method.

When the client 100 receiving the transfer-stopped message file information from the server 300 determines, at step 416, whether a message file has been changed, the client 100 carries out the upload resumption operation for partial contents subsequent to already transferred contents in a total size of messages to be transferred if the message file has not been changed. The client 100 performs the upload resumption operation for the message file according to the POST method. At this point, the message file used for the upload resumption operation is configured according to HTTP/1.1 POST Server-uniform resource locator (URL), and includes "Host: client host name", "User-Agent: client user-agent name", "Message-ID: client message identifier", "Range: bytes", "Partial Content-length", etc. The POST method for the upload resumption function in accordance with the present invention adds the Range entity to the existing POST method. The client 100 notifies the server 300 of the POST method for the upload resumption function. The Message-ID represents an identifier of a message file undergoing the upload resumption operation by the client 100. The Range entity is an entity used for supporting the download resumption function in the existing GET method, and is also used for supporting the upload resumption operation to the server 300 in the POST method. The client 100 notifies the server 300 of upload resumption execution using the Range entity. At this point, a value included in the Range entity indicates a range of partial contents to be transferred by the client 100 after the transfer is stopped. The POST method conforms to the method defined by Request for Comments (RFC) 2616. When the Range entity is included in a POST message file transferred by the client 100, the server 300 recognizes the upload resumption operation and must carry out a storing operation for partial contents transferred by the upload resumption operation. When the POST request for the upload resumption operation is made, the client 100 must include the Message-ID field and the Range field indicating the range of partial contents to be transferred through the upload resumption operation in the request.

Furthermore, the Message-ID entity indicates an identifier of the message file transferred from the client 100 to the server 300 and is an entity commonly provided in a message file transfer or reception function regardless of the upload resumption function. The client 100, identical to the User-Agent and Host, must ensure the uniqueness of the Message-ID value. Moreover, if the message file transfer is unsuccessful, the server 300 must store the Message-ID and the partial contents provided by the client 100 for a predetermined period. Here, the Message-ID is a unique message ID. When the message file transfer is stopped, the server 300 stores transfer-stopped message file information (associated with User-Agent, Host, Message-ID, Content-length, etc.). When the client 100 makes a request for message file upload resumption information, the server 300 must provide partial content information corresponding to the Message-ID. The server 300 receives partial contents through the upload resumption operation by the client 100. The server 300 must store the partial contents transferred from the client 100 after the transfer is stopped.

In case of the partial contents transferred in a chunk mode that does not define the total message file length, the client 100 notifies the server 300 of the chunk mode when sending the remaining data.

Subsequently, the server 300 notifies the client 100 that the upload resumption operation for the message file from the client 100 has been successfully completed at step 418. At this point, the server's response to the POST request for upload resumption is configured according to HTTP/1.1 200 OK, which means that the upload resumption operation by the client 100 has been successfully performed.

Meanwhile, when the content length of a message file obtained from the information of the transfer-stopped message file is not identical to the content length of a message file to be retransferred, that is, when the message file has been changed by the user, the client 100 automatically transfers the changed message file, without carrying out the upload resumption. When the ID of a message file newly transferred by the client 100 is identical to that of the previously transfer-stopped message file, the server 300 must automatically delete the stored message file associated with the stopped transfer and simultaneously store the new message file.

In other words, when information of the entire message file size included in the server's response to a PINFO request is different from that of the entire message file size associated with the upload resumption operation by the client 100, it is regarded that the client 100 has changed a corresponding message file, such that the client 100 automatically retransfers the entire message file using the POST method without carrying out the upload resumption function.

Where the message file is retransferred using the existing POST method, the upload resumption function does not need to be performed because a time difference is negligible when a small-capacity message file is transferred. However, if the transfer fails when a large-capacity message file is transferred, the upload resumption function can be used in accordance with the present invention, thereby reducing the transfer time. Moreover, the present invention has an advantage in that the previously transferred message file is utilized again through the upload resumption and therefore unnecessary network use can be avoided.

In other words, the present invention can avoid unnecessary network use in a wireless Internet environment and reduce the cost of the Internet use. Furthermore, the present invention can perform an upload resumption function selected by a client when a network fails due to an external factor or message file transfer is cancelled by the client without performing an operation based on a server's one-sided retransfer request resulting from a network failure, thereby providing users with convenience in using a hypertext transfer protocol (HTTP)-based application.

Although the preferred embodiments of the present invention have been disclosed for illustrative purposes, those skilled in the art will appreciate that various modifications, additions and substitutions are possible, without departing from the scope of the invention.

## Claims

1. A method of transferring a message file from a client to a server over the Internet, the method comprising the steps of:
sending a request for information about the transfer-stopped message file to the server when a message file transfer is stopped after the client initiates the message file transfer to the server;
the server providing the transfer-stopped message file information to the client in response to the file information request; and
the client carrying out an upload resumption function to upload transfer-stopped partial contents of the message file to the server according to the transfer-stopped message file information provided by the server.

2. The method of claim 1, wherein the transfer-stopped message file information includes an identifier of the message file and information indicating a size of the transfer-stopped partial contents with respect to a size of the entire message file.

3. The method of claim 1 or 2, further comprising a step of:
the client determining whether a total size of the transfer-stopped message file has been changed upon receipt of the transfer-stopped message file information; and
if the total size of the transfer-stopped message file has been changed, retransferring the entire message file.

4. The method of one of claims 1 to 3, further comprising a step of:
the server deleting the previously stored message file and storing the new message file transferred from the client if a previously stored message file is identical to a new message file transferred from the client.

5. The method of one of claims 1 to 4, further comprising a step of:
the client sending a message to the server to determine whether the server supports the upload resumption function for the message file before transferring the message file ; and
the server sending a response message to the client determining whether the server supports the upload resumption function.
